(19) Europäisches Patentamt
European Patent Office
Office européen des brevets

(11) EP 1 857 507 B1

(12) # EUROPÄISCHE PATENTSCHRIFT

(45) Veröffentlichungstag und Bekanntmachung des Hinweises auf die Patenterteilung:
**22.11.2017 Patentblatt 2017/47**

(51) Int Cl.:
***C09C 1/24*** (2006.01) ***C04B 14/30*** (2006.01)
***C09D 7/12*** (2006.01) ***C08K 3/22*** (2006.01)
***C08K 9/04*** (2006.01) ***C04B 103/54*** (2006.01)

(21) Anmeldenummer: **07009134.3**

(22) Anmeldetag: **07.05.2007**

(54) **Oxidationsstabile Eisenoxidpigmente, Verfahren zu ihrer Herstellung sowie deren Verwendung.**

Oxidation stable iron oxide pigments, method for their production and their use.

Pigment d'oxyde de fer résistant à l'oxydation, méthode de leur fabrication et leur usage

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.05.2006 DE 102006023245**

(43) Veröffentlichungstag der Anmeldung:
**21.11.2007 Patentblatt 2007/47**

(73) Patentinhaber: **LANXESS Deutschland GmbH
50569 Köln (DE)**

(72) Erfinder:
- **Friedrich, Holger, Dr.
47798 Krefeld (DE)**
- **Kunstmann, Herbert, Dr.
47802 Krefeld (DE)**

(56) Entgegenhaltungen:
**EP-A- 0 302 342 DE-A1- 2 502 657
DE-A1- 4 322 886**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft oxidationsstabile Eisenoxidpigmente, die eine Beschichtung aus mindestens einer organischen Substanz aufweisen, deren Herstellung und deren Verwendung.

Eisenoxidpigmente, welche Eisen in der Oxidationsstufe +2 enthalten, stellen im Vergleich zu Eisen(III)-Oxid - $Fe_2O_3$ - thermodynamisch instabile Phasen dar. Sie können in Gegenwart von Luft beziehungsweise Sauerstoff partiell oder vollständig oxidiert werden, zum Beispiel

$$2Fe_3O4 + ½O_2 \rightarrow 3Fe_2O_3$$

Solche Reaktionen sind beispielsweise bei Eisenoxidschwarz-Pigmenten bekannt, die in ihrer Zusammensetzung und Struktur dem Magnetit entsprechen. Das Pigment büßt durch die Oxidation seine wichtigste Eigenschaft, die Farbe, ein und wird somit unbrauchbar. Die Oxidationsneigung nimmt in dem Maße zu, wie auch die Feinteiligkeit und somit die spezifische Oberfläche der Pigmente zunimmt.

Das gleiche gilt für Mischungen von Eisenoxidschwarz mit anderen Eisenoxid-Farbpigmenten - Eisenoxidrot beziehungsweise Eisenoxidgelb - wie sie für braune Farbtöne hergestellt werden.

Ist es bei den Farbpigmenten der Verlust der koloristischen Eigenschaften, der sie unbrauchbar macht, so ist es bei den Eisen(II)-haltigen Magnetpigmenten der Verlust der magnetischen Eigenschaften, der gleichfalls durch die Oxidation hervorgerufen wird. Gefährdet sind vor allem feinteilige Magnetitpigmente sowie Mischphasen zwischen Magnetit ($Fe_3O_4$) und Maghämit ($\gamma$-$Fe_2O_3$) mit hohem Eisen(II)-Gehalt. Oxidationsempfindlich sind aber auch Mischphasen von Magnetit und/oder Ferrite, wie zum Beispiel Cobaltferrit und solche Magnetpigmente, die aus einem Kern aus $Fe_3O_4$ und $\gamma$-$Fe_2O_3$ und einer diesen Kern umgebenden Hülle aus magnetischen Metalloxiden - insbesondere des Eisens und des Cobalts - zusammengesetzt sind. In der Fachliteratur findet man neben der Bezeichnung Mischphase auch den Ausdruck "Berthollide" für die hier beschriebenen Zusammensetzungen.

Aus der DE 27 44 598 A1 ist es bekannt, die Oxidationsempfindlichkeit feinteiliger ferrimagnetischer Magnetitpartikel durch Behandlung mit heterocyclischen organischen Verbindungen zu vermindern. Diese Behandlung bedingt gegenüber den unbehandelten Pigmenten eine erhebliche Verbesserung, die aber über ein bestimmtes Niveau nicht zu steigern ist. Morpholin, N-(3-Aminopropyl-) Morpholin, N-(2-Hydroxyethyl)-piperazin, 1,2,4-Triazol und 3-Amino-1,2,4-Triazol haben sich als besonders wirkungsvoll erwiesen. Die eingesetzten Heterocyclen werden dabei lediglich physikalisch am Pigment adsorbiert und gehen daher in die wasserlöslichen Bestandteile ein. Hieraus können Unverträglichkeiten in unterschiedlichen Bindemittelsystemen resultieren. Die Behandlung der Magnetitpanikel mit der heterocyclischen organischen .Verbindung erfolgt ferner unter einer nichtoxidierenden Atmosphäre, und die Anwesenheit von Luft ist auszuschließen. Daher ist das Verfahren aufwendig.

Die DE 41 39 052 A1 offenbart Eisenoxidpigmente, die zur Erhöhung der Stabilität gegenüber Luftoxidation mit cyclischen Carbonsäurehydraziden der allgemeinen Formel

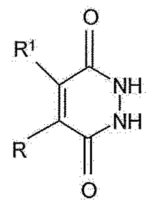

beschichtet werden. Bevorzugt werden "Phthalsäurehydrazid" und "Maleinsäurehydrazid" eingesetzt. Bei allen Verbindungen der oben genannten allgemeinen Formel handelt es sich allerdings bei genauerer Betrachtung lediglich um 3,6-Dihydroxy-substituierte Derivate des Pyridazins, da zu den Verbindungen der oben genannten allgemeinen Formel folgende tautomere Form existiert.

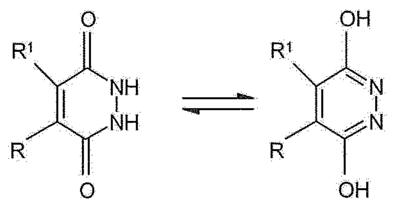

Für "Phthalsäurehydrazid" und "Maleinsäurehydrazid" sind daher auch die Bezeichnungen 1,4-Dihydroxyphthalazin beziehungsweise 3,6-Dihydroxypyridazin gebräuchlich. Insofern handelt es sich bei den in DE 4139 052 A1 offenbarten cyclischen Carbonsäurehydraziden um einfache stickstoffhaltige Heterocyclen. Diese werden - wie bereits oben erwähnt - lediglich physikalisch am Pigment adsorbiert und gehen daher in die wasserlöslichen Bestandteile ein. Hieraus können Unverträglichkeiten in unterschiedlichen Bindemittelsystemen resultieren.

Die DE 37 26 048 A beschreibt eine Beschichtung von Eisenoxidpigmenten mit Derivaten der Benzoesäure, die der allgemeinen Formel

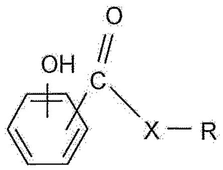

entsprechen, wobei
X = O oder NH und

R = einen gegebenenfalls substituierten linearen oder verzweigten Alkyl- oder Alkylenrest mit 1 bis 30 C-Atomen oder einen gegebenenfalls substituierten Cycloalkylrest mit 5 bis 12 C-Atomen oder einen gegebenenfalls substituierten Arylrest mit 5 bis 10 C-Atomen oder Wasserstoff bedeutet. Besonders bevorzugt sind Salicylsäurester, die aliphatische Alkoholkomponenten mit 2 bis 18 C-Atomen enthalten, zum Beispiel Salicylsäureoctylester oder Salicylsäuredodecylester. Die eingesetzten Derivate der Benzoesäure der allgemeinen Formel werden dabei lediglich physikalisch am Pigment adsorbiert und gehen daher in die wasserlöslichen Bestandteile ein. Hieraus können Unverträglichkeiten in unterschiedlichen Bindemittelsystemen resultieren.

Im Stand der Technik sind auch zahlreiche anorganische Beschichtungen beziehungsweise Beschichtungen aus Mischungen von anorganischen und organischen Substanzen beschrieben, um die Oxidationsstabilität von Eisenoxidpigmenten zu verbessern.

So wird in der DE 32 11 327 A1 die Nachbehandlung mit borenthaltenden Verbindungen beschrieben. Als solche kommen *ortho*-Borsäure, *tetra*-Borsäure, *meta*-Borsäure, glasiges Dibortrioxid, kristallines Dibortrioxid, Borsäuretrimethylester, Borsäuretriethylester, Komplexe von Borsäure mit Polyhydroxyverbindungen und Salze von Borsäuren, wie zum Beispiel $NH_4B_5O_8 * 4\ H_2O$, $Na_2B_4O_6 * 10\ H_2O$, $CaB_3O_5OH * 2H_2O$ oder $NaBO_2$ in Betracht. Auch Bor/Stickstoff-Verbindungen oder Bor-Schwefelverbindungen werden genannt. Bevorzugt werden als Borverbindungen Boroxide, Borsäuren und/oder Salze von Borsäuren, besonders bevorzugt *ortho*-Borsäure und/oder Dibortrioxid eingesetzt. In den offenbarten Beispielen wird pulverisierte *ortho*-Borsäure und pulverisiertes Dibortrioxid zugesetzt. Die mit Borsäure stabilisierten Pigmente weisen eine vergleichbare Oxidationsstabilität wie die mit heterocyclischen Verbindungen beschichteten Pigmente, bei gleichzeitiger Verringerung der wasserlöslichen Anteile, auf.

Die DE 43 22 886 A1 offenbart Eisenoxidpigmente, die mit Oxiden oder Hydroxiden des Bors, Aluminiums und/oder Siliziums sowie mit aromatischen Carbonsäuren der allgemeinen Formel

$$Ar\text{-}(COOX)_n$$

beschichtet sind, wobei Ar für einen gegebenenfalls mit Halogen, $NH_2$, OH, NHR, $NR_2$, OR oder R substituierten Aromaten steht, in dem R einen linearen oder verzweigten Alkylrest mit 1 bis 30 C-Atomen oder einen gegebenenfalls substituierten Arylrest mit 6 bis 10 C-Atomen darstellt und X für Wasserstoff, Alkali, $NR^1_4$ mit $R^1$ = H, Alkyl und/oder Aryl, ½ Erdalkali, ⅓ Al oder ⅓ Fe steht und n für eine ganze Zahl von 1 bis 10 steht. In den offenbarten Beispielen werden Mischungen von Borsäure und Benzoesäure beziehungsweise von Borsäure und 4-Hydroxybenzoesäure zugesetzt.

Eine Expertenkommission der europäischen Union hat vorgeschlagen, Borsäure, Borate der *ortho*-Borsäure, wie zum Beispiel $Na_3BO_3$, beziehungsweise der *tetra*-Borsäure, wie zum Beispiel $Na_2B_4O_6 * 10\ H_2O$ oder $Na_2B_4O_6 * 5\ H_2O$ sowie Dibortrioxid als reproduktionstoxisch (fortpflanzungsgefährdend) der Kategorie 2 (Stoffe, die aufgrund eindeutiger tierexperimenteller Befunde oder sonstiger relevanter Informationen als fruchtschädigend beziehungsweise als beeinträchtigend für die Fortpflanzungsfähigkeit beim Menschen angesehen werden sollten) und als "giftig" (Gefahrenbezeichnung T) einzustufen (siehe Protokoll einer Experienbefragung bei der EU "Commission Working Group of Specialised Experts in the Field of Reprotoxicity", Ispra, 05.-06. Oktober 2004 - Protokolldatum vom 22. November 2004). Am 08. September 2005 hat das EU Technical Committee "Classification and Labeling" die oben genannten Verbindungen abschließend behandelt. Mit Mehrheitsbeschluss wurde der Empfehlung der Expertenkommission gefolgt und für diese Stoffgruppen die Klassifizierung mit "reproduktionstoxisch Kategorie 2" festgeschrieben. Es gelten die R-Sätze 60 (kann die Fortpflanzungsfähigkeit beeinträchtigen) und 61 (kann das Kind im Mutterleib schädigen) sowie die Gefahrenbezeichung T ("giftig") (siehe Protokoll der Sitzung des EU Technical Committee "Classification and Labeling", Arona, 08. September 2005). Der Umgang mit diesen Substanzen, beziehungsweise deren Einsatz im Produktionsprozess zur Stabilisierung der Eisen(II)-haltigen Eisenoxidpigmente, erfordert damit entsprechende Maßnahmen zum Schutz der Mitarbeiter und der Umwelt. Aus diesem Grunde ist der Ersatz der oben genannten Verbindungen wünschenswert.

Aufgabe der vorliegenden Erfindung war es daher, oxidationsstabile Eisen(II)-haltige Eisenoxidpigmente bereit zu stellen, die eine mindestens genau so gute Oxidationsstabilität wie borhaltige Eisenoxidpigmente aufweisen, die aber ohne den Einsatz anorganischer Substanzen in einem Schritt unter Verwendung von handelsüblichen organischen Substanzen hergestellt werden können.

Diese Aufgabe wurde gelöst durch Eisenoxidpigmente mit einem Eisen(II)-Gehalt von mindestens 5 Gew.-%, gerechnet als FeO, die eine organische Beschichtung aufweisen, dadurch gekennzeichnet, dass die Beschichtung aus einer oder mehreren Verbindungen der allgemeinen Formel (I)

$$R\text{-}(COOX)_n$$

besteht, wobei

- R ein gesättigter oder ungesättigter, linearer oder verzweigter aliphatischer Rest mit 1 bis 15 C-Atomen, der gegebenenfalls ein- oder mehrfach mit Halogen und/oder $NH_2$ und/oder OH und/oder $NHR^1$ und/oder $NR^1_2$ und/oder $OR^1$ substituiert ist oder
  ein alicyclischer Rest mit 4 bis 26 C-Atomen, welcher gegebenenfalls ein- oder mehrfach mit Halogen und/oder $NH_2$ und/oder OH und/oder $NHR^1$ und/oder $NR^1_2$ und/oder $OR^1$ und/oder $R^1$ substituiert ist
  wobei $R^1$ ein gesättigter oder ungesättigter linearer oder verzweigter gegebenenfalls substituierter aliphatischer Rest mit jeweils 1 bis 10 C-Atomen oder ein gegebenenfalls substituierter alicyclischer oder aromatischer Rest mit jeweils 6 bis 10 C-Atomen ist;

- X für Wasserstoff, Alkalimetall, $NR^2_4$ worin $R^2$ H oder einen linearen oder verzweigten aliphatischen, alicyclischen oder aromatischen Rest darstellt, ½ Erdalkalimetall, ⅓ Al oder ⅓ Fe und

- n für eine ganze Zahl von 1 bis 10 steht

und die Eisenoxidpigmente eine Oxidationsstabilität gemäß dem Oxidationsstabilitäts-Test von ≥ 10°C gegenüber dem nicht beschichteten Eisenoxidpigment aufweisen. Die Oxidationsstabilität wird gemäß dem in den Beispielen offenbarten Oxidationsstabilitäts-Test festgestellt.

Die Eisenoxidpigmente weisen vorzugsweise eine Oxidationsstabilität von ≥ 20°C gegenüber dem nicht beschichteten Eisenoxidpigment auf.

Unter "aliphatisch" werden im Kontext der Erfindung Verbindungen verstanden, deren C-Atome - im Gegensatz zu den isocyclischen Verbindungen, bei denen die C-Atome Ringe bilden - in Ketten angeordnet sind. Damit werden aliphatische Verbindungen den acyclischen Verbindungen gleichgesetzt, deren Untergruppen die Alkane, Alkine oder Alkene mit unverzweigten oder verzweigten Ketten sind.

Unter "alicyclisch" werden im Kontext der Erfindung - wie schon die durch Zusammenziehung der beiden Begriffe "aliphatisch" und "cyclisch" gebildete Bezeichnung andeutet - Verbindungen verstanden, deren C-Atome in Ringen angeordnet sind. Alicyclisch steht daher auch als Synonym für cycloaliphatisch. Alicyclische Verbindungen gehören somit zur Gruppe der isocyclischen Verbindungen und umfassen also Cycloalkane, Cycloalkene und Cycloalkine. Aromatische Verbindungen und heterocyclische Verbindungen sowie die gesättigten Vertreter der heterocyclischen Verbindungen gelten nicht als alicyclisch im Sinne dieser Erfindung.

Unter aromatisch" werden im Kontext der Erfindung lediglich carbocyclische aromatische Verbindungen verstanden, bei denen die Ringglieder nur aus C-Atomen bestehen. Dazu gehören unter anderem Benzol sowie Verbindungen, die mehrere kondensierte Benzolringe enthalten wie beispielsweise Naphthalin, Anthracen oder Phenanthren. Heterocyclen, bei denen nicht ausschließlich C-Atome im Ring beziehungsweise in Ringen angeordnet sind, gelten nicht als aromatisch in Sinne dieser Erfindung.

Die alicyclischen und aromatischen Verbindungen im Sinne dieser Erfindung können auch unter dem Oberbegriff "Carbocyclen" zusammengefasst werden, da die Ringglieder in beiden Fällen nur aus C-Atomen bestehen.

Die Beschichtung besteht vorzugsweise aus einer Verbindung der allgemeinen Formel (I), wobei R für einen gesättigten linearen oder verzweigten aliphatischen Rest mit 1 bis 15 C-Atomen, bevorzugt mit 1 bis 8 C-Atomen, steht.

Die Beschichtung besteht vorzugsweise aus einer Verbindung der allgemeinen Formel (I), wobei X für Wasserstoff, $NR^2_4$ worin $R^2$ H oder einen linearen oder verzweigten aliphatischen, alicyclischen oder aromatischen Rest darstellt oder ein Alkalimetall, bevorzugt Natrium oder Kalium, steht.

Die Beschichtung besteht vorzugsweise aus einer Verbindung der allgemeinen Formel (I), wobei n für eine ganze Zahl ≤ 5, bevorzugt ≤ 3, steht. Die organischen Verbindungen der allgemeinen Formel (I) verfügen somit über eine oder

mehrere Carboxylat- oder Carbonsäuregruppen. Diese Gruppe(n) können als Ankerfunktion dienen, so dass die organischen Verbindungen der allgemeinen Formel (I) in der Lage sind, zur Oberfläche des Eisenoxidpigments auch ionogene Bindungen auszubilden.
Die organischen Verbindungen der allgemeinen Formel (I) werden vorzugsweise in Form der Säureanhydride eingesetzt. Die Säureanhydride können mit der auf der Pigmentoberfläche noch vorhandenen Restfeuchte zu den entsprechenden Carbonsäuren hydrolysieren.
Die organischen Verbindungen der allgemeinen Formel (I) enthalten vorzugsweise zusätzlich noch Wasser und werden in Form ihrer Hydrate eingesetzt.

Als organische Verbindungen werden vorzugsweise Acetate eingesetzt. Die organischen Verbindungen der allgemeinen Formel (I) liegen vorzugsweise in einer Menge von 0.1 bis 10 Gew.-%, bevorzugt von 0.2 bis 3 Gew.-%, im beschichteten Pigment vor.

Bei den üblicIen Eisenoxidschwarz-Pigmenten mit einem Eisen(II)-Gehalt zwischen 17 und 28 Gew.-%, gerechnet als FeO, und spezifischen Oberflächen von unter 23 $m^2/g$, gemessen mit Hilfe der Sticlcstoff Ein-Punkt-Adsotptionsmethode nach BET (DIN 66131/ISO 9277) liegen vorzugsweise die organischen Verbindungen der allgemeinen Formel (I) in einer Menge von 0.1 bis 10 Gew.-%, bevorzugt von 0.2 bis 5 Gew.-%, besonders bevorzugt von 0.2 bis 3 Gew.-%, im beschichteten Pigment vor.

Die zur magnetischen Signalspeicllerung verwendeten Pigmente sind feinteiliger als die Eisenoxidschwarz-Pigmente (BET-Oberflächen - bestimmt nach der Stickstoff-Ein-Punkt-Adsorptionsmethode - größer als 23 $m^2/g$) und erfordern bei gleich hohen Eisen(II)-Gehalten entsprechend ihrer spezifischen Oberfläche, die ohne weiteres 40 $m^2/g$ überschreiten kann, größere Zusatzmengen der organischen Verbindungen der allgemeinen Formel (I).

Ist der Eisen(II)-Gehalt niedriger, wie es beispielsweise bei den oben beschriebenen, mit magnetischen Metalloxiden umhüllten Eisenoxid-Magnetpigmenten der Fall sein kann, so kann die Zusatzmenge entsprechend vermindert werden. Die im jeweiligen Einzelfall zur Erreichung der gewünschten Oxidationsstabilität notwendige Behandlungsmenge ist im übrigen für den Fachnann mit Hilfe einiger Testversuche gemäß dem offenbarten Oxidationsstabilitäts-Test ohne Schwierigkeiten feststellbar.

Die Eisenoxidpigmente weisen vorzugsweise einen Restfeuchtegehalt von < 5 Gew.-%, bevorzugt von < 3.5 Gew.-% auf. Dieser kann gegebenenfalls durch eine Nachtrocknung erreicht werden.

Die erfindungsgemäßen thermisch stabilen Eisenoxidpigmente liegen entweder als Pulver oder in Granulatform vor. Unter "Granulat" wird im Kontext der Erfindung jedes Material verstanden, dessen mittlere Korngröße im Vergleich mit den Ausgangsmaterialien durch einen Behandlungsschritt vergrößert worden ist. "Granulat" umfasst daher nicht nur Sprühgranulate und Kompaktierungsgranulate, sondern auch zum Beispiel Produkte einer Nass- oder Feuchtbehandlung mit anschließender Zerkleinerung, und Produkte trockener oder im wesentlichen trockener Verarbeitungsschritte, zum Beispiel trocken hergestellte Granulate, Briketts und dergleichen. Bei einem Granulat weisen mindestens 85% Partikel eine Teilchengröße im Bereich von 60 $\mu$m bis 3000 $\mu$m, bevorzugt von 80 $\mu$m bis 1500 $\mu$m, auf.

Die Erfindung betrifft auch ein Verfahren zur Herstellung von Eisenoxidpigmenten, dadurch gekennzeichnet, dass Eisenoxidpigmente mit einem Fe(II)-Gehalt von mindestens 5 Gew.-%, gerechnet als FeO, mit mindestens einer Verbindung der allgemeinen Formel (I) gemischt und die Mischung gegebenenfalls getrocknet und/oder gemahlen wird, wobei die erhaltenen Eisenoxidpigmente eine Oxidationsstabilität gemäß dem Oxidationsstabilitäts-Test von $\geq$ 10°C gegenüber dem nicht beschichteten Eisenoxidpigment aufweisen. Die Herstellung der erfindungsgemäßen Eisenoxidpigmente kann entweder ausgehend vom trockenen Pigment oder auch in der Nassphase (Suspension oder Paste) erfolgen. Eisenoxidpigmente mit einem Fe(II)-Gehalt von mindestens 5 Gew.-%, gerechnet als FeO, werden vorzugsweise in einer Suspension oder Paste mit mindestens einer Verbindung der allgemeinen Formel (I) gemischt und die Mischung getrocknet und gegebenenfalls gemahlen, wobei die erhaltenen Eisenoxidpigmente eine Oxidationsstabilität gemäß dem Oxidationsstabilitäts-Test von $\geq$ 10°C gegenüber dem nicht beschichteten Eisenoxidpigment aufweisen.

Die Pigmentsuspension ist vorzugsweise eine Suspension oder Paste aus dem Pigmentherstellungsprozess.

Die Pigmentsuspension ist vorzugsweise eine erneute Dispersion von agglomerierten Partikeln.

Die Eisenoxidpigmente werden vorzugsweise abschließend einer Temperaturbehandlung bei 200°C bis 800°C in einer nicht- oder schwach oxidierenden Atmosphäre ausgesetzt.

Bei den zu stabilisierenden Eisenoxidpigmenten mit einem Eisen(II)-Gehalt von mindestens 5 Gew.-%, gerechnet als FeO, kann es sich um Farbpigmente wie Eisenoxidschwarz und/oder Eisenoxidbraun handeln, es können aber auch magnetische Pigmente wie Magnetit oder Mischphasen von Magnetit mit Maghämit und/oder Ferriten oder mit magnetischen Metalloxiden umhüllte Magnetite beziehungsweise Eisenoxide mit einem Oxidationszustand zwischen Magnetit und Maghämit sein.

Die Herstellung Eisen(II)-haltiger Eisenoxidpigmente ist in der Literatur beschrieben. Sie sind durch viele Verfahren zugänglich. Eisenoxidschwarz-Pigmente werden im technischen Maßstab hauptsächlich nach zwei Verfahren hergestellt (Ullnann's Encyclopedia of Industrial Chemistry, 5. Auflage, Band A20, Seite 297, VCH Verlagsgesellschaft mbH, Weinheim 1992): dem Fällverfahren, bei dem Eisen(II)-salzlösungen unter Einleiten von Luft bei circa 90°C in der Nähe des Neutralpunktes mit Alkalien ausgefällt werden, bis das gewünschte Fe(III)/Fe(II)-Verhältnis erreicht ist, und

dem Laux-Verfahren, bei dem Nitrobenzol mit metallischem Eisen zu Anilin reduziert wird und welches so gesteuert werden kann, dass farbstarke Eisenoxidschwarz-Pigmente entstehen.

Je nach Herstellungsverfahren und Reinheit der verwendeten Rohstoffe können Eisenoxidschwarz-Pigmente in wechselnden Mengen, gewöhnlich bis zu 5 Gew.-%, Nebenbestandteile wie zum Beispiel $SiO_2$ oder $Al_2O_3$ enthalten. Normalerweise liegt auch das Fe(III)/Fe(II)-Verhältnis über dem theoretischen Zahlenwert von 2.

Eisen(II)-haltige Eisenoxidbraun-Pigmente werden zum weitaus größten Teil durch Mischen von Eisenoxidgelb und/oder Eisenoxidrot mit Eisenoxidschwarz hergestellt (Ullmann's Encyclopedia of Industrial Chemistry, siehe oben).

Zur Herstellung Eisen(II)-haltiger Eisenoxid-Magnetpigmente (Ullmann's Encyclopedia of hidustrial Chemistry, 5. Auflage, Band A20, Seite 330, VCH Verlagsgesellschaft mbH, Weinheim 1992) geht man meist von $\alpha$-FeOOH oder $\gamma$-FeOOH aus, trocknet, entwässert und reduziert bei 350°C bis 600°C mit Wasserstoff zum $Fe_3O_4$, Mischphasen aus Magnetit und Maghämit können durch partielle Oxidation der Magnetpigmente unter schonenden Bedingungen erhalten werden. Mischphasenpigmente ("Berthollide") von Magnetit mit Maghämit und/oder Ferriten werden übliclerweise hergestellt, indem man Ferrite bildende Metalle, wie zum Beispiel Zn, Mn, Co, Ni, Ca, Mg, Ba, Cu oder Cd als Oxide beziehungsweise Hydroxide bei der Herstellung der FeOOH-Vorprodukte mitfällt beziehungsweise auf fertige FeOOH-Pigmente aufbringt und diese konvertiert. Auch diejenigen speziellen Magnetpigmente, die durch Aufbringen einer Beschichtung aus magnetischen Metalloxiden, insbesondere des Eisens und des Cobalts, auf einen Kern aus $Fe_3O_4$ oder einem Eisenoxid mit einem Oxidationszustand zwischen $Fe_3O_4$ und $\gamma$-$Fe_2O_3$ hergestellt werden, können geschützt werden.

Nach dem ersten erfindungsgemäßen Verfahren werden die in an sich bekannter Weise hergestellten Eisen(II)-haltigen Eisenoxidpigmente mit mindestens einer organischen Verbindung der allgemeinen Formel (I) gemischt. Die organischen Verbindungen werden zweckmäßigerweise zuvor in einen feinteiligen Zustand gebracht. Sie können aber auch in Form einer Lösung oder Suspension in wässrigem und/oder organischem Medium zugemischt werden. Zum Mischen können gängige technische Apparate verwendet werden, wie zum Beispiel pneumatisch arbeitende Mischer, Schaufelmischer, Schneckenmischer, Trommelmischer oder Konustnischer. Das Mischen kann bei Raumtemperatur oder aber auch bei höheren Temperaturen als Raumtemperatur erfolgen. Man wird im allgemeinen in Gegenwart von Luft arbeiten, jedoch kann bei Anwendung höherer Temperaturen die Verwendung von Inertgasen, wie zum Beispiel Stickstoff, von Vorteil sein. Werden nur kleine Mengen einer oder mehrerer organischer Verbindungen der allgemeinen Formel (I) mit großen Mengen Pigment vermischt, so kann die Herstellung einer Vermischung vorteilhaft sein. Die erhaltene Mischung wird dann gegebenenfalls gemahlen. Hierzu sind Mahlaggregate unterschiedlicher Bauart geeignet, wie zum Beispiel Walzenmühlen, Kollergänge, Pendelmühlen, Hammermühlen, Stiftmühlen, Turbomühlen, Kugelmühlen oder Strahlmühlen. Die Mahlung kann bei Raumtemperatur oder höheren Temperaturen als Raumtemperatur, gegebenenfalls unter Inertgasen, wie zum Beispiel Stickstoff durchgeführt werden. Gegebenenfalls wird anschließend bei Temperaturen bis zu 800°C in inerter oder nur geringe Mengen Sauerstoff enthaltender Atmosphäre getempert.

Nach dem zweiten erfindungsgemäßen Verfahren werden die in an sich bekannter Weise hergestellten Eisen(II)-haltigen Eisenoxidpigmente zunächst in Suspension oder Paste mit mindestens einer organischen Verbindung der allgemeinen Formel (I) gemischt. Der Zusatz der organischen Verbindungen in der Nassphase ist vorteilhaft, da in der Suspension die Zugabe und das Untermischen der organischen Verbindungen der allgemeinen Formel (I) problemlos möglich ist. Als Suspensionsmedium wird man im allgemeinen Wasser verwenden, jedoch ist prinzipiell auch der Einsatz von wässrig/organischen oder rein organischen Medien möglich. Die Pigmentsuspension oder Paste ist vorzugsweise eine Suspension aus dem Pigmentherstellungsprozess. Die organischen Verbindungen der allgemeinen Formel (I) können zu einem beliebigen Zeitpunkt vor, während oder nach der Pigmentherstellung der Suspension zugesetzt werden. Die Pigmentsuspension kann aber auch eine erneute Dispersion von bereits agglomerierten Partikeln sein, um ausgehend von Pigmentpulver, gezielt eine Pigmentsuspension für die Behandlung mit mindestens einer organischen Verbindung der allgemeinen Formel (I) herzustellen. Die Behandlung kann in allen Fällen bei Raumtemperatur oder höherer Temperatur, gegebenenfalls unter Inertgasatmosphäre, vorgenommen werden. Die Behandlungsdauer beträgt vorzugsweise eine Minute bis einige Stunden. Das behandelte Pigment wird in einem weiteren Verfahrensschritt getrocknet. Für den Trocknungsschritt steht dem Fachmann eine Reihe von Aggregaten zur Verfügung. Es seien an dieser Stelle nur Kanal-, Band-, Etagen-, Walzen-, Trommel-, Röhren-, Schaufeltrockner, oder auch diskontinuierlich arbeitende Kammer-Horden-Trockner erwähnt. Die Trocknung erfolgt vorzugsweise durch Sprühtrocknung oder Wirbelschichttrocknung. Vorzugsweise werden Sprühtrocknen (Zerstäubungstrockner) eingesetzt, die mit Sprühscheiben oder -düsen im Gleich- oder Gegenstromverfahren arbeiten. Je nach gewähltem Trocknungsaggregat kann es erforderlich sein, dass sich noch ein Mahlschritt anschließt. Das beschichtete, getrocknete Pigment wird dann wie beim ersten Verfahren gegebenenfalls gemahlen und gegebenenfalls anschließend bei Temperaturen bis zu 800°C in inverter oder nur geringe Mengen Sauerstoff enthaltender Atmosphäre getempert.

Ein Vorteil der erfindungsgemäßen Herstellungsverfahren ist, dass das Auffällen einer Nachbehandlungssubstanz oder gar ein mehrstufiges Syntheseverfahren für die Nachbehandlung bei der Herstellung der erfindungsgemäßen oxidationsstabile Eisenoxidpigmente nicht erforderlich ist.

Oxidationsstabile Eisen(II)-haltige Eisenoxidpigmente, welche Mischungen verschiedener Eisenoxid-Farbpigmente sind, werden aus Kostengründen zweckmäßigerweise so hergestellt, dass lediglich diejenigen Mischungspartner, welche zweiwertiges Eisen enthalten, nach einem der beiden erfindungsgemäßen Verfahren vor Oxidation geschützt werden, und erst dann die Mischung mit den anderen Eisenoxidpigmenten durchgeführt wird. Es ist aber selbstverständlich auch möglich, die Mischung aus Eisen(II)-haltigen Eisenoxid-Farbpigmenten und Eisen(II)-freien Eisenoxid-Farbpigmenten als Ganzes einem der beiden erfindungsgemäßen Verfahren zu unterziehen.

Es ist nicht erfindungswesentlich, ob die erfindungsgemäßen oxidationsstabilen Eisenoxidpigmente in Pulverform oder in granulierter Form vorliegen. Wenn die oxidationsstabilen Eisenoxidpigmente in granulierter Form hergestellt werden sollen, so eignen sich dafür die gängigen Verfahren. Nach dem Stand der Technik kommen als Herstellungsverfahren für Pigmentgranulate Sprühgranulation (sprühtrocknung über Scheibe oder Düse) im Gleich- oder Gegenstromverfahren, Aufbaugranulation (Mischer, Wirbelschichtgranulator, Teller beziehungsweise Trommel), Kompaktier- oder Extrusionsverfahren in Frage. Natürlich sind auch Kombinationen aus diesen Granulationsverfahren denkbar. Die Wahl des geeigneten Granulationsverfahrens hängt unter anderem davon ab, ob die organische Verbindung der allgemeinen Formel (I) bereits in der Nassphase (Suspension oder Paste) zugesetzt wird oder zum bereits getrockneten Pigment. Im ersten Fall bieten sich die Sprühtrocknungs- oder Extrusionsverfahren an, im zweiten Fall das Kompaktieiverfahren. Oxidationsstabile Eisenoxidpigmente werden vorzugsweise in trockenem und gegebenenfalls gemahlenem Zustand anschließend noch einem Granulationsprozess unterworfen.

Die Erfindung betrifft auch die Verwendung der Eisenoxidpigmente zur Einfärbung von kalk- und/oder zementgebundenen Baustoffen, zur Einfärbung von Kunststoffen, Lacken, Dispersionsfarben und zur Herstellung von magnetischen Aufzeichnungsträgern und Tonern.

Die kalk- und/oder zementgebundenen Baustoffe sind vorzugsweise Beton, Zementmörtel, Putz und/oder Kalksandstein. Die Eisenoxidpigmente werden mit den Baustoffen in einer Menge von 0,1 bis 10 Gew.-% bezogen auf Zement vermischt. Sie können aber auch zuerst in Wasser suspendiert und anschließend mit den Baustoffen vermischt werden.

Die Eisenoxidpigmente können vorteilhaft zur Fertigung magnetischer Aufzeichnungsmaterialien jeglicher Art verwendet werden, wie zum Beispiel Audio- und Videobänder, Instrumentationsbänder, Computerbänder, Magnetkarten, flexible Magnetscheiben, starre Magnetplatten oder Trommelspeicher.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll.

## I. Beschreibung der verwendeten Messmethoden

### I.1 Oxidationsstabilitäts-Test

Die Prüfung der Oxidationsstabilität erfolgte in Anlehnung an ein Testverfahren für Stoffe die einer oxidativen Selbsterhitzung unterliegen, das in den "Enmpfehlungen für die Beförderung gefährlicher Güter - Handbuch über Prüfungen und Kriterien" der Vereinten Nationen in der dritten überarbeiteten Ausgabe der deutschen Übersetzung von der Bundesanstalt für Materialforschung und -prüfung in Teil III, Kapital 33.3.1.6.1 bis 33.3.1.6.3, Seite 338 beschrieben ist.

Ofen: Ein Ofen mit Warmluftzirkulation und einem Innenvolumen von mehr als 91, der so eingerichtet ist, dass er die eingestellte Solltemperatur im Innern auf $\pm$ 2°C genau zu halten vermag.

Probenbehälter: Kubischer Probenbehälter von 10 cm Kantenlänge aus rostfreiem Stahldrahtnetz von 350 mesh Maschenweite mit offener Oberseite. Dieser Probenbehälter muss in einen kubischen Schutzbehälter von 10.8 cm Kantenlänge aus rostfreiem Stahldraht von 8 mesh Maschenweite eingesetzt werden. Der Probenbehälter besitzt an den oberen Ecken kleine Haltestangen, damit er frei und mittig im Schutzbehälter aufgehängt werden kann. Der Schutzbehälter steht auf Stelzen, damit er in der Mitte des Trockenschrankes aufgestellt werden kann.

Temperaturmessung: Die Temperaturerfassung in der Probe erfolgt mittels NiCrNi-Mantelthermoelement mit 1.5 mm Durchmesser. Dieses Thermoelement ist in der Mitte der Probe anzuordnen. Die Temperaturerfassung und Regelung des Ofens erfolgt über ein Platin-Widerstandthermometer PT 100, das bis in die Ofenkammer hinein ragt und zwischen Probenbehälter und Ofenwand angeordnet ist. Die beiden Temperaturen sind kontinuierlich zu messen.

Probenvorbereitung: Die pulverförmige oder granulierte Probe ist zunächst bis zur Hälfte in den Probenbehälter einzufüllen und der Behälter ist dreimal aus circa 3 cm Höhe leicht aufzustauchen. Dann wird der Probenbehälter bis zum Rand mit der pulverförmigen oder granulierten Probe gefüllt und der Behälter ist abermals dreimal aus circa 3 cm Höhe leicht aufzustauchen. Wenn sich die Probe absetzt, ist bis zum Rand nachzufüllen. Der Probenbehälter ist mittig in den Schutzbehälter einzusetzen und der Schutzbehälter in die Mitte des Ofens zu stellen.

Prüfbedingungen: Die Ofentemperatur wird zunächst auf eine Solltemperatur von 120°C eingestellt und mindestens 20 Stunden gehalten. Die Temperatur im Inneren der Probe ist zu registrieren. Wenn die Temperatur in der

Probe während der Versuchsdauer die Ofentemperatur um 60°C übersteigt, so ist das Ergebnis des Oxidationsstabilitäts-Tests positiv, da in der Probe eine Selbsterhitzung als Folge einer Oxidation eingetreten ist. In einem solchen Fall wird der Oxidationsstabilitäts-Tests mit einer neu präparierten Probe bei einer um 10°C erniedrigten Solltemperatur des Ofens erneut durchgeführt. Dies ist so lange zu wiederholen, bis der Test ein negatives Ergebnis liefert, d. h. die Temperatur im Innern der Probe während der Versuchsdauer die Ofentemperatur um 60°C nicht übersteigt, so dass keine Selbsterhitzung der Probe als Folge einer Oxidation - verbunden mit einem Temperaturanstieg von über 60°C - eintritt. Liefert der Versuch bei einer Solltemperatur des Ofens von 120°C bereits ein negatives Ergebnis, so wird der Oxidationsstabilitäts-Test mit einer neu präparierten Probe bei einer um 10°C erhöhten Solltemperatur des Ofens erneut durchgeführt. Dies ist so lange zu wiederholen, bis der Oxidationsstabilitäts-Test ein positives Ergebnis erbringt. Die maximal erreichte Solltemperatur des Ofens, bei der der Oxidationsstabilitäts-Test gerade noch ein negatives Ergebnis erbringt, also bei der die Probe stabil gegenüber einer Oxidation ist, gilt als Oxidationsstabilität/Thermostabiliät für das untersuchte Pigment. Diese Temperatur ist bei den jeweiligen Beispielen beziehungsweise in den Tabellen 1 bis 3 angegeben.

### I.2 Baustoff-Farbtest

Die Prüfung der Farbwerte in Baustoffen erfolgte in Zementmörtel über die farbmetrische Messung von mit Weißzement hergestellten Prismen bei folgenden Daten:

Zement-Quarzsand-Verhältnis 1:4, Wasser-Zement-Wert 0.35, Pigmentierungshöhe 1.2 %, bezogen auf Zement, verwendeter Mischer von RK Toni Technik, Berlin, mit 5 1-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5 % Siebrückstand auf 90 µm-Sieb), 500 g Weißzement. Die Quarzsandfraktionen und das Kalksteinmehl werden zusammen im Mischbehälter vorgelegt. Anschließend wird das Pigment zugegeben und 10 s vorgemischt (Mischer Stufe 1: langsam). Zu dieser Mischung wird nun das Wasser gegeben, wobei darauf zu achten ist, dass es in die Mitte der Mischung eingebracht wird. Nach dem Versickern wird der Zement zugesetzt und gemischt (Mischer Stufe 1: langsam). Nach 100 s Mischzeit wird eine Probe (600 g) entnommen und daraus ein Probekörper (10 x 10 x 2.5 cm) unter Druck hergestellt (Presskraft 114 kN für 2 Sekunden). Farbdatemnessung über Minolta Chromameter 310 mit 4 Messpunkten je Stein (Messgeometrie d/8°, Lichtart C/2° mit Glanzeinschluss). Die erhaltenen Mittelwerte werden verglichen mit den Werten einer Referenz- beziehungsweise Bezugsprobe (nicht beschichtetes Pigment aus Beispiel 1 für die Proben in Tabelle 1 beziehungsweise nicht beschichtetes Pigment aus Beispiel 9 für die Proben in Tabelle 3). Beurteilt werden der Gesamtfarbabstand $\Delta E_{ab}^*$ und die relative Farbstärke (Referenzprobe = 100 %) (DIN 5033, DIN 6174). Dabei berechnet sich der Gesamtfarbabstand $\Delta E_{ab}^*$ gemäß

- $\Delta E_{ab}^* = [(\Delta L^*)^2 + (\Delta a^*)^2 + (\Delta b^*)^2]^{1/2}$,
  wobei die folgenden - aus dem CIELAB-System bekannt Abkürzungen gelten
- $a^*$ entspricht der Rot-Grün-Achse mit $\Delta a^* = a^*$ (Probe) - $a^*$ (Bezug)
- $b^*$ entspricht der Gelb-Blau-Achse mit $\Delta b^* = b^*$ (Probe) - $b^*$ (Bezug)
- $L^*$ entspricht der Helligkeit mit $\Delta L^* = L^*$ (Probe) - $L^*$ (Bezug)

### I.3 Relative Farbstärke

Für die relative Farbstärke in % gelten folgende Gleichungen:

$$\text{Relative Farbstärke in \%} = \frac{(K/S)_{Probe}}{(K/S)_{Bezug}} \cdot 100$$

$$K/S = \frac{(1-\beta^*)^2}{2 \cdot \beta^*}$$

$$\beta^* = \frac{Y/100 - r_0}{1 - r_0 - r_2 \cdot (1 - Y/100)},$$

wobei $r_0$ = 0,04 und $r_2$ = 0,6 und Y der Normfarbwert (Helligkeit) ist.
Die Berechnung erfolgt in Anlehnung an DIN 53 234.

### I.4 Restfeuchte

Die Restfeuchte wurde durch schonende Trocknung des (beschichteten) Pigments bis zur Gewichtskonstanz bestimmt.

### I.5 Druckfestigkeit

Die Druckfestigkeit wurde in Anlehnung an DIN EN 196-1 bestimmt. Geprüft wird dabei die Druckfestigkeit von pigmentiertem Zementmörtel im Vergleich zur einer unpigmentierten Probe, wobei die Abweichungen nicht größer sein dürfen als in der DIN EN 12878 "Pigmente zum Einfärben von kalk- und/oder zementgebundenen Baustoffen" vorgegeben (maximal -8 % für bewehrten Beton).

### I.6 Erstarrungsverhalten

Das Erstarrnngsverhalten wurde in Anlehnung an DIN EN 196-3 bestimmt. Dabei wird der Erstarrungsbeginrt und das Erstarrungsende eines Zementleims mit und ohne Pigmentierung mit einander verglichen, wobei die Abweichungen nicht größer sein dürfen als in der DIN EN 12878 vorgegeben.

### II. Beispiel 1 (Vergleichsbeispiel ohne Beschichtungssubstanz)

Ein Eisenoxidschwarz-Pigment, hergestellt nach dem Laux-Verfahren, mit einer BET von 12.0 $m^2/g$ und einem FeO-Gehalt von 23.4% wurde nach Abtrennung des Anilins filtriert, salzfrei gewaschen, über einen Sprühtrockner mit Sprühscheibe getrocknet und über eine Bauermeistermühle mit 1 mm Siebeinsatz gemahlen. Das erhaltene Pigment wurde dem Oxidationsstabilitäts-Test und weiteren Abtestungen unterzogen. Die Ergebnisse sind in Tabelle 1 zusammengefasst.

### III. Beispiel 2 (Vergleichsbeispiele, hergestellt nach dem Stand der Technik)

Zu jeweils 5 kg des getrockneten Eisenoxidschwarz-Pigments aus Beispiel 1 wurden in einem Mischer 75 g (entspricht 1.5 Gew.-%) pulverisiete *ortho*-Borsäure (Beispiel 2a) beziehungsweise 75 g (entspricht 1.5 Gew.-%) einer 1:1-Pulvermischung aus Benzoesäure und *ortho*-Borsäure (Beispiel 2b) zugesetzt, 15 Minuten gemischt und anschließend über eine Bauermeistermühle mit 1 mm Siebeinsatz gemahlen. Die jeweils erhaltenen beschichteten Pigmente wurden dem Oxidationsstabilitäts-Test und weiteren Abtestungen unterzogen. Die Ergebnisse sind in Tabelle 1 zusammengefasst.

### IV. Beispiel 3

Zu jeweils 5 kg des getrockneten Eisenoxidschwarz-Pigments aus Beispiel 1 wurden in einem Mischer 75 g (entspricht 1.5 Gew.-%) von verschiedenen pulverisierten organischen Verbindungen der allgemeinen Formel (I) zugesetzt, 15 Minuten gemischt und anschließend über eine Bauerneistermühle mit 1 mm Siebeinsatz gemahlen. Die jeweils erhaltenen beschichteten Pigmente wurden dem Oxidationsstabilitäts-Test und weiteren Abtestungen unterzogen. Die Ergebnisse sind in Tabelle 1 zusammengefasst.

### V. Beispiel 4 (Vergleichsbeispiele, hergestellt nach dem Stand der Technik)

Zu jeweils 5 kg des getrockneten Eisenoxidschwarz-Pigments aus Beispiel 1 wurden in einem Mischer 125 g (entspricht 2.5 Gew.-%) pulverisierte *ortho*-Borsäure (Beispiel 4a) beziehungsweise 125 g (entspricht 2.5 Gew.-%) einer 1:1-Pulvermischung aus Benzoesäure und *ortho*-Borsäure (Beispiel 4b) zugesetzt, 15 Minuten gemischt und anschließend über eine Bauermeistermühle mit 1 mm Siebeinsatz gemahlen. Die jeweils erhaltenen beschichteten Pigmente wurden dem Oxidationsstabilitäts-Test und weiteren Abtestungen unterzogen. Die Ergebnisse sind in Tabelle 1 zusammengefasst.

### VI. Beispiel 5

Zu jeweils 5 kg des getrockneten Eisenoxidschwarz-Pigments aus Beispiel 1 wurden in einem Mischer 125 g

(entspricht 2.5 Gew.-%) von verschiedenen pulverisierten organischen Verbindungen der allgemeinen Formel (I) zugesetzt, 15 Minuten gemischt und anschließend über eine Bauermeistermühle mit 1 mm Siebeinsatz gemahlen. Die jeweils erhaltenen beschichteten Pigmente wurden dem Oxidationsstabilitäfs-Test und weiteren Abtestungen unterzogen. Die Ergebnisse sind in Tabelle 1 zusammengefasst.

**VII. Beispiel 6 (Vergleichsbeispiel ohne Beschichtungssubstanz)**

Ein Eisenoxidschwarz-Pigment, hergestellt nach dem Laux-Verfahren, mit einer BET von 15.5 $m^2/g$ und einem FeO-Gehalt von 17.5% wurde nach der Synthese und nach Abtrennung des Anilins filtriert und salzfrei gewaschen. Der Filterkuchen wurde mit Wasser zu einer Paste mit 50% Feststoffgehalt angemaischt. 10 kg dieser Eisenoxidschwarz-Paste wurden ohne irgendwelche Zusätze getrocknet, in einem Trockenschrank über einen Schroter mit 3 mm Maschenweite vorzerkleinert und schließlich über eine Bauermeistermühle mit 1 mm Siebeinsatz gemahlen. Das erhaltene Pigment wurde dem Oxidationsstabilitäts-Test unterzogen. Die Ergebnisse sind in Tabelle 2 zusammengefasst.

**VIII. Beispiel 7 (Vergleichsbeispiele, hergestellt nach dem Stand der Technik)**

10 kg der angemischten Eisenoxidschwarz-Paste aus Beispiel 6 wurde mit 75 g einer 1:1 Mischung aus Benzoesäure und *ortho*-Borsäure versetzt (entspricht 1.5 Gew.-%), 15 Minuten gerührt, in einem Trockenschrank getrocknet, über einen Schroter mit 3 mm Maschenweite vorzerkleinert und schließlich über eine Bauermeistermühle mit 1 mm Siebeinsatz gemahlen. Das erhaltene Pigment wurde dem Oxidationsstabilitäts-Test unterzogen. Die Ergebnisse sind in Tabelle 2 zusammengefasst.

**IX. Beispiel 8**

Jeweils 10 kg der angemaischten Eisenoxidschwarz-Paste aus Beispiel 6 wurden mit 75 g von verschiedenen organischen Verbindungen der allgemeinen Formel (I) versetzt (entspricht 1.5 Gew.-%), 15 Minuten gerührt, in einem Trockenschrank getrocknet, über einen Schroter mit 3 mm Maschenweite vorzerkleinert und schließlich über eine Bauermeistermühle mit 1 mm Siebeinsatz gemahlen. Die jeweils erhaltenen Pigmente wurden dem Oxidationsstabilitäts-Test unterzogen. Die Ergebnisse sind in Tabelle 2 zusammengefasst.

**X. Beispiel 9 (Vergleichsbeispiel ohne Beschichtungssubstanz)**

Ein Eisenoxidschwarz-Pigment, hergestellt nach dem Laux-Verfahren wurde nach der Synthese und nach Abtrennung des Anilins filtriert und salzfrei gewaschen. Der Filterkuchen besaß einen Feststoffgehalt von 66.7 Gew.-% und wurde ohne irgendwelche Zusätze getrocknet. Der erhaltene Feststoff wurde über einen Schroter mit 3 mm-Maschenweite vorzerkleinert und anschließend über eine Bauermeistermühle mit 1 mm Siebeinsatz gemahlen. Das erhaltene Pigment wies eine BET von circa 21 $m^2/g$ und einen FeO-Gehalt von 21.1% auf. Es wurde dem Oxidationsstabilitäts-Test und dem Baustoff-Farbtest unterzogen. Die Ergebnisse sind in Tabelle 3 zusammengefasst.

**XI. Beispiel 10**

Jeweils 7.5 kg des gewaschenen Eisenoxidschwarz-Filterkuchens mit 66.7 Gew.-% Feststoffgehalt aus Beispiel 9 wurden mit 2.5 kg Wasser zu einer Paste mit 50 Gew.-% Feststoffgehalt angemaischt. Die Paste wurde mit 125 g von verschiedenen organischen Verbindungen der allgemeinen Formel (I) versetzt (entspricht 2.5 Gew.-%), 15 Minuten gerührt, getrocknet, über einen Schroter mit 3 mm-Maschenweite vorzerkleinert und anschließend über ein Bauermeistermühle mit 1 mm-Siebeinsatz gemahlen. Die jeweils erhaltenen Pigmente wurden dem Oxidationsstabilitäts-Test und dem Baustoff Farbtest unterzogen. Die Ergebnisse sind in Tabelle 3 zusammengefasst.

**XII. Beispiel 11 (Vergleichsbeispiel ohne Beschichtungssubstanz)**

Ein Eisenoxidschwarz-Pigment, hergestellt nach dem Fällungsverfahren aus Eisen(II)-sulfat wurde nach der Synthese filtriert und salzfrei gewaschen. Der Filterkuchen wurde zu einer Suspension mit 22.8 Gew.-% Feststoffgehalt angemaischt. Die Suspension wurde geteilt und ein Teil ohne irgendwelche Zusätze getrocknet. Der erhaltene Feststoff wurde über einen Schroter mit 3 mm-Maschenweite vorzerkleinert und anschließend über eine Bauermeistermühle mit 1 mm Siebeinsatz gemahlen. Das erhaltene Pigment wies eine BET von 18.2 $m^2/g$ und einen FeO-Gehalt von 20.6% auf. Es wurde dem Oxidationsstabilitäts-Test unterzogen und ergab eine Oxidationsstabilität von 80°C.

**XIII. Beispiel 12**

19.3 kg der im Beispiel 11 beschriebenen Suspension mit 22.8 Gew.% Feststoffgehalt wurde mit 110 g Isophthalsäure versetzt (entspricht 2.5 Gew.-%), 15 Minuten geführt und getrocknet. Der erhaltene Feststoff wurde über einen Schroter mit 3 mm-Maschenweite vorzerkleinert und anschließend über ein Bauermeistermühle mit 1 mm-Siebeinsatz gemahlen. Das erhaltene beschichtete Pigment ergab im Oxidationsstabilitäts-Test eine Oxidationsstabilität von 100°C.

**Tabelle 1**

| Beispiel | Zugesetzte organische Verbindung gemäß der allgemeinen Formel (I) | Oxidationsstabilität [°C] | Restfeuchte [%] | Relative Farbstärke [%] | Gesamtfarbabstand $\Delta E_{ab}^*$ | Druckfestigkeit | Erstarrungsverhalten |
|---|---|---|---|---|---|---|---|
| **1)** | keine | 120 | 3.6 | 100 (Bezug) | 0.0 (Bezug) | erfüllt | erfüllt |
| **2a)** | 1.5 Gew.-% *ortho*-Borsäure | 140 | 2.2 | 105 | 0.5 | erfüllt | erfüllt |
| **2b)** | 1.5 Gew.% 1:1 Mischung Benzoesäure / *ortho*-Borsäure | 140 | 1.0 | 105 | 0.4 | erfüllt | erfüllt |
| **3a)** | 1.5 Gew.-% Maleinsäure, Dinatriumsalz | 140 | 3.4 | 103 | 0.3 | erfüllt | erfüllt |
| **3b)** | 1.5 Gew.-% Natriumacetat Trihydrat | 140 | 2.1 | 99 | 0.2 | erfüllt | erfüllt |
| **4a)** | 2.5 Gew.-% *ortho*-Borsäure | 150 | 3.0 | 98 | 0.2 | erfüllt | erfüllt |
| **4b)** | 2.5 Gew.-% 1:1 Mischung Benzoesäure / *ortho*-Borsäure | 150 | 1.4 | 103 | 0.2 | erfüllt | erfüllt |

**Tabelle 2**

| Beispiel | Zugesetzte organische Verbindung gemäß der allgemeinen Formel (I) | Oxidationsstabilität [°C] | Restfeuchte [%] |
|---|---|---|---|
| **6)** | keine | 110 | 0.6 |
| **7)** | 1.5 Gew.-% 1:1 Mischung Benzoesäure / *ortho*-Borsäure | 120 | 0.6 |

**Tabelle 3**

| Beispiel | Zugesetzte organische Verbindung gemäß der allgemeinen Formel (I) | Oxidationsstabilität [°C] | Relative Farbstärke [%] | Gesamtfarbabstand $\Delta E_{ab}^*$ |
|---|---|---|---|---|
| **9)** | keine | 100 | 100 (Bezug) | 0.0 (Bezug) |
| **10a)** | 2.5 Gew.-% Natriumacetat Trihydrat | 120 | 99 | 0.2 |
| **10d)** | 2.5 Gew.-% DL-Camphersäureanhydrid | 120 | 100 | 0.0 |
| **10e)** | 2.5 Gew.-% (1R, 3S)-(+)-Camphersäure | 110 | 95 | 0.5 |

**Patentansprüche**

1. Oxidationsstabile Eisenoxidpigmente mit einem Fe(II)-Gehalt von mindestens 5 Gew.%, gerechnet als FeO, die eine Beschichtung aufweisen, **dadurch gekennzeichnet, dass** die Beschichtung aus einer oder mehreren Verbindungen der allgemeinen Formel (I)

$$R\text{-}(COOX)_n$$

besteht, wobei

R ein gesättigter oder ungesättigter linearer oder verzweigter aliphatischer Rest mit 1 bis 15 C-Atomen, der gegebenenfalls ein- oder mehrfach mit Halogen und/oder $NH_2$ und/oder OH und/oder $NHR^1$ und/oder $NR^1_2$ und/oder $OR^1$ substituiert ist oder
ein alicyclischer Rest mit 4 bis 26 C-Atomen, welcher gegebenenfalls ein- oder mehrfach mit Halogen und/oder $NH_2$ und/oder OH und/oder $NHR^1$ und/oder $NR^1_2$ und/oder $OR^1$ und/oder $R^1$ substituiert ist
wobei $R^1$ ein gesättigter oder ungesättigter linearer oder verzweigter gegebenenfalls substituierter aliphatischer Rest mit jeweils 1 bis 10 C-Atomen oder ein gegebenenfalls substituierter alicyclischer oder aromatischer Rest mit jeweils 6 bis 10 C-Atomen ist;
X für Wasserstoff, Alkalimetall, $NR^2_4$ worin $R^2$ H oder einen linearen oder verzweigten aliphatischen, alicyclischen oder aromatischen Rest darstellt, ½ Erdalkalimetall, ⅓ Al oder ⅓ Fe und
n für eine ganze Zahl von 1 bis 10 steht

und die Eisenoxidpigmente eine Oxidationsstabilität gemäß dem Oxidationsstabilitäts-Test von ≥ 10°C gegenüber dem nicht beschichteten Eisenoxidpigment aufweisen.

2. Eisenoxidpigmente gemäß Anspruch 1 **dadurch gekennzeichnet, dass** die Eisenoxidpigmente eine Oxidationsstabilität von ≥ 20°C gegenüber dem nicht beschichteten Eisenoxidpigment aufweisen.

3. Eisenoxidpigmente gemäß einem oder mehreren der Ansprüche 1 bis 2, **dadurch gekennzeichnet, dass** die Beschichtung aus einer Verbindung der allgemeinen Formel (I) besteht, wobei R für einen gesättigten linearen oder verzweigten aliphatischen Rest mit 1 bis 15 C-Atomen, insbesondere mit 1 bis 8 C-Atomen steht.

4. Eisenoxidpigmente gemäß einem oder mehreren der Ansprüche 1 bis 3, **dadurch gekennzeichnet, dass** die Beschichtung aus einer Verbindung der allgemeinen Formel (I) besteht, wobei X für Wasserstoff, oder ein Alkalimetall, insbesondere Natrium oder Kalium, steht.

5. Eisenoxidpigmente gemäß einem oder mehreren der Ansprüche 1 bis 4, **dadurch gekennzeichnet, dass** die Beschichtung aus einer Verbindung der allgemeinen Formel (I) besteht, wobei n für eine ganze Zahl $\leq 5$, insbesondere $\leq 3$, steht.

6. Eisenoxidpigmente gemäß einem oder mehreren der Ansprüche 1 bis 5, **dadurch gekennzeichnet, dass** die Verbindungen der allgemeinen Formel (I) Säureanhydride sind.

7. Eisenoxidpigmente gemäß einem oder mehreren der Ansprüche 1 bis 5, **dadurch gekennzeichnet, dass** die Verbindungen der allgemeinen Formel (I) zusätzlich noch Wasser enthalten.

8. Eisenoxidpigmente gemäß einem oder mehreren der Ansprüche 1 bis 5, **dadurch gekennzeichnet, dass** Verbindungen der allgemeinen Formel (I) Acetate sind.

9. Eisenoxidpigmente gemäß einem oder mehreren der Ansprüche 1 bis 6, **dadurch gekennzeichnet, dass** die Verbindungen der allgemeinen Formel (I) in einer Menge von 0.1 bis 10 Gew.%, insbesondere von 0.2 bis 3 Gew.%, im beschichteten Pigment vorliegen.

10. Eisenoxidpigmente gemäß einem oder mehreren der Ansprüche 1 bis 7, **dadurch gekennzeichnet, dass** die Eisenoxidpigmente einen Restfeuchtegehalt von < 5 Gew.-%, insbesondere von < 3.5 Gew.-% aufweisen.

11. Verfahren zur Herstellung von Eisenoxidpigmenten gemäß einem oder mehreren der Ansprüche 1 bis 10, **dadurch gekennzeichnet, dass** Eisenoxidpigmente mit einem Fe(II)-Gehalt von mindestens 5 Gew.%, gerechnet als FeO mit mindestens einer Verbindung der allgemeinen Formel (I) gemischt und die Mischung gegebenenfalls getrocknet und/oder gemahlen wird.

12. Verfahren zur Herstellung von Eisenoxidpigmenten gemäß Anspruch 11 , **dadurch gekennzeichnet, dass** Eisenoxidpigmente mit einem Fe(II)-Gehalt von mindestens 5 Gew.%, gerechnet als FeO in einer Suspension oder Paste mit mindestens einer Verbindung der allgemeinen Formel (I) gemischt und die Mischung getrocknet und gegebenenfalls gemahlen wird.

13. Verfahren zur Herstellung von Eisenoxidpigmenten gemäß Anspruch 12, **dadurch gekennzeichnet, dass** die Pigmentsuspension eine Suspension oder Paste aus dem Pigmentherstellungsprozess ist.

14. Verfahren zur Herstellung von Eisenoxidpigmenten gemäß Anspruch 12, **dadurch gekennzeichnet, dass** die Pigmentsuspension eine erneute Dispersion von agglomerierten Partikeln ist.

15. Verfahren gemäß einem der Ansprüche 11 bis 14, **dadurch gekennzeichnet, dass** die Eisenoxidpigmente abschließend einer Temperaturbehandlung bei 200°C bis 800°C in einer nicht- oder schwach oxidierenden Atmosphäre ausgesetzt werden.

16. Verwendung der Eisenoxidpigmente gemäß einem oder mehreren der Ansprüche 1 bis 10 oder der nach dem Verfahren gemäß der Ansprüche 11 bis 15 hergestellten Eisenoxidpigmente zur Einfärbung von kalk- und/oder zementgebundenen Baustoffen, zur Einfärbung von Kunststoffen, Lacken, Dispersionsfarben und zur Herstellung von magnetischen Aufzeichnungsträgern und Tonern.

17. Verwendung gemäß Anspruch 16, **dadurch gekennzeichnet, dass** die kalk- und/oder zementgebundenen Baustoffe Beton, Zementmörtel, Putz und/oder Kalksandstein sind.

## Claims

1. Oxidation-stable iron oxide pigments having an Fe(II) content of at least 5% by weight, calculated as FeO, and having a coating, **characterized in that** the coating is composed of one or more compounds of the general formula (I)

$$R\text{-}(COOX)_n$$

where

R is a saturated or unsaturated linear or branched aliphatic radical having 1 to 15 carbon atoms which is optionally substituted one or more times by halogen and/or $NH_2$ and/or OH and/or $NHR^1$ and/or $NR^1_2$ and/or $OR^1$, or is an alicyclic radical having 4 to 26 carbon atoms which is optionally substituted one or more times by halogen and/or $NH_2$ and/or OH and/or $NHR^1$ and/or $NR^1_2$ and/or $OR^1$ and/or $R^1$,
$R^1$ being a saturated or unsaturated linear or branched optionally substituted aliphatic radical having in each case 1 to 10 carbon atoms or an optionally substituted alicyclic or aromatic radical having in each case 6 to 10 carbon atoms;
X is hydrogen, alkali metal, $NR^2_4$, $R^2$ being H or a linear or branched aliphatic, alicyclic or aromatic radical, or ½ alkaline earth metal, ⅓ Al or ⅓ Fe and
n is an integer from 1 to 10

and the iron oxide pigments have an oxidation stability in the oxidation stability test of ≥ 10°C as compared with the uncoated iron oxide pigment.

2. Iron oxide pigments according to Claim 1, **characterized in that** the iron oxide pigments have an oxidation stability of ≥ 20°C as compared with the uncoated iron oxide pigment.

3. Iron oxide pigments according to one or more of Claims 1 and 2, **characterized in that** the coating is composed of a compound of the general formula (I) in which R is a saturated linear or branched aliphatic radical having 1 to 15 carbon atoms, in particular having 1 to 8 carbon atoms

4. Iron oxide pigments according to one or more of Claims 1 to 3, **characterized in that** the coating is composed of a compound of the general formula (I) in which X is hydrogen, or an alkali metal, in particular sodium or potassium.

5. Iron oxide pigments according to one or more of Claims 1 to 4, **characterized in that** the coating is composed of a compound of the general formula (I) where n is an integer ≤ 5, in particular ≤ 3.

6. Iron oxide pigments according to one or more of Claims 1 to 5, **characterized in that** the compounds of the general formula (I) are acid anhydrides.

7. Iron oxide pigments according to one or more of Claims 1 to 5, **characterized in that** the compounds of the general formula (I) additionally contain water as well.

8. Iron oxide pigments according to one or more of Claims 1 to 5, **characterized in that** compounds of the general formula (I) are acetates.

9. Iron oxide pigments according to one or more of Claims 1 to 6, **characterized in that** the compounds of the general formula (I) are present in an amount of 0.1% to 10% by weight, in particular of 0.2% to 3% by weight, in the coated pigment.

10. Iron oxide pigments according to one or more of Claims 1 to 7, **characterized in that** the iron oxide pigments have a residual moisture content of < 5% by weight, in particular of < 3.5% by weight.

11. Process for preparing iron oxide pigments according to one or more of Claims 1 to 10, **characterized in that** iron oxide pigments having an Fe(II) content of at least 5% by weight, calculated as FeO are mixed with at least one compound of the general formula (I) and the mixture is optionally dried and/or ground.

12. Process for preparing iron oxide pigments according to Claim 11, **characterized in that** iron oxide pigments having an Fe(II) content of at least 5% by weight, calculated as FeO are mixed in a suspension or paste with at least one compound of the general formula (I) and the mixture is dried and optionally ground.

13. Process for preparing iron oxide pigments according to Claim 12, **characterized in that** the pigment suspension is a suspension or paste from the pigment production operation.

**14.** Process for preparing iron oxide pigments according to Claim 12, **characterized in that** the pigment suspension is a renewed dispersion of agglomerated particles.

**15.** Process according to one of Claims 11 to 14, **characterized in that** the iron oxide pigments are exposed concludingly to a temperature treatment at 200°C to 800°C in a non-oxidizing or weakly oxidizing atmosphere.

**16.** Use of the iron oxide pigments according to one or more of Claims 1 to 10 or of the iron oxide pigments prepared by the process according to Claims 11 to 15 for colouring lime- and/or cement-bound building materials, for colouring plastics, varnishes, emulsion paints and for producing magnetic recording media and toners.

**17.** Use according to Claim 16, **characterized in that** the lime- and/or cement-bound building materials are concrete, cement mortar, plaster and/or sand-lime brick.

## Revendications

**1.** Pigments d'oxyde de fer stables à l'oxydation ayant une teneur en Fe(II) d'au moins 5 % en poids, calculée en tant que FeO, qui comprennent un revêtement, **caractérisés en ce que** le revêtement est constitué d'un ou de plusieurs composés de formule générale (I)

$$R\text{-}(COOX)_n$$

dans laquelle

R représente un radical aliphatique saturé ou insaturé, linéaire ou ramifié, de 1 à 15 atomes C, qui est éventuellement substitué une ou plusieurs fois avec halogène et/ou $NH_2$ et/ou OH et/ou $NHR^1$ et/ou $NR^1_2$ et/ou $OR^1$, ou

un radical alicyclique de 4 à 26 atomes C, qui est éventuellement substitué une ou plusieurs fois avec halogène et/ou $NH_2$ et/ou OH et/ou $NHR^1$ et/ou $NR^1_2$ et/ou $OR^1$ et/ou $R^1$,
$R^1$ étant un radical aliphatique saturé ou insaturé, linéaire ou ramifié, éventuellement substitué, contenant à chaque fois 1 à 10 atomes C, ou un radical alicyclique ou aromatique éventuellement substitué contenant à chaque fois 6 à 10 atomes C ;

X représente l'hydrogène, un métal alcalin, $NR^2_4$ ; $R^2$ représentant H ou un radical aliphatique, alicyclique ou aromatique linéaire ou ramifié ; ½ métal alcalino-terreux, ⅓ Al ou ⅓ Fe, et
n représente un nombre entier de 1 à 10,
et les pigments d'oxyde de fer présentent une stabilité à l'oxydation selon le test de stabilité à l'oxydation de ≥ 10 °C par rapport au pigment d'oxyde de fer non revêtu.

**2.** Pigments d'oxyde de fer selon la revendication 1, **caractérisés en ce que** les pigments d'oxyde de fer présentent une stabilité à l'oxydation de ≥ 20 °C par rapport au pigment d'oxyde de fer non revêtu.

**3.** Pigments d'oxyde de fer selon une ou plusieurs des revendications 1 à 2, **caractérisés en ce que** le revêtement est constitué d'un composé de formule générale (I), dans laquelle R représente un radical aliphatique saturé linéaire ou ramifié de 1 à 15 atomes C, notamment de 1 à 8 atomes C.

**4.** Pigments d'oxyde de fer selon une ou plusieurs des revendications 1 à 3, **caractérisés en ce que** le revêtement est constitué d'un composé de formule générale (I), dans laquelle X représente l'hydrogène ou un métal alcalin, notamment le sodium ou le potassium.

**5.** Pigments d'oxyde de fer selon une ou plusieurs des revendications 1 à 4, **caractérisés en ce que** le revêtement est constitué d'un composé de formule générale (I), dans laquelle n représente un nombre entier ≤ 5, notamment ≤ 3.

**6.** Pigments d'oxyde de fer selon une ou plusieurs des revendications 1 à 5, **caractérisés en ce que** les composés de formule générale (I) sont des anhydrides d'acides.

**7.** Pigments d'oxyde de fer selon une ou plusieurs des revendications 1 à 5, **caractérisés en ce que** les composés

de formule générale (I) contiennent en outre de l'eau.

8. Pigments d'oxyde de fer selon une ou plusieurs des revendications 1 à 5, **caractérisés en ce que** les composés de formule générale (I) sont des acétates.

9. Pigments d'oxyde de fer selon une ou plusieurs des revendications 1 à 6, **caractérisés en ce que** les composés de formule générale (I) sont présents en une quantité de 0,1 à 10 % en poids, notamment de 0,2 à 3 % en poids, dans le pigment revêtu.

10. Pigments d'oxyde de fer selon une ou plusieurs des revendications 1 à 7, **caractérisés en ce que** les pigments d'oxyde de fer présentent une teneur en humidité résiduelle < 5 % en poids, notamment < 3,5 % en poids.

11. Procédé de fabrication de pigments d'oxyde de fer selon une ou plusieurs des revendications 1 à 10, **caractérisé en ce que** des pigments d'oxyde de fer ayant une teneur en Fe (II) d'au moins 5 % en poids, calculée en tant que FeO, sont mélangés avec au moins un composé de formule générale (I) et le mélange est éventuellement séché et/ou broyé.

12. Procédé de fabrication de pigments d'oxyde de fer selon la revendication 11, **caractérisé en ce que** des pigments d'oxyde de fer ayant une teneur en Fe(II) d'au moins 5 % en poids, calculée en tant que FeO, sont mélangés avec au moins un composé de formule générale (I) dans une suspension ou une pâte et le mélange est séché et éventuellement broyé.

13. Procédé de fabrication de pigments d'oxyde de fer selon la revendication 12, **caractérisé en ce que** la suspension de pigments est une suspension ou une pâte issue du procédé de fabrication des pigments.

14. Procédé de fabrication de pigments d'oxyde de fer selon la revendication 12, **caractérisé en ce que** la suspension de pigments est une nouvelle dispersion de particules agglomérées.

15. Procédé selon l'une quelconque des revendications 11 à 14, **caractérisé en ce que** les pigments d'oxyde de fer sont enfin exposés à un traitement thermique à une température de 200 °C à 800 °C dans une atmosphère non ou faiblement oxydante.

16. Utilisation des pigments d'oxyde de fer selon une ou plusieurs des revendications 1 à 10 ou des pigments d'oxyde de fer fabriqués par le procédé selon les revendications 11 à 15 pour la coloration de matériaux de construction liés par de la chaux et/ou du ciment, pour la coloration de plastiques, de vernis, de peintures en dispersion et pour la fabrication de supports d'enregistrement magnétiques et de toners.

17. Utilisation selon la revendication 16, **caractérisée en ce que** les matériaux de construction liés par de la chaux et/ou du ciment sont du béton, du mortier de ciment, du crépi et/ou des briques silico-calcaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2744598 A1
- DE 4139052 A1
- DE 3726048 A
- DE 3211327 A1
- DE 4322886 A1


### In der Beschreibung aufgeführte Nicht-Patentliteratur


- **ISPRA.** Commission Working Group of Specialised Experts in the Field of Reprotoxicity. *Protokoll einer Experienbefragung bei der EU,* 05. Oktober 2004
- **ARONA.** Classification and Labeling. *Protokoll der Sitzung des EU Technical Committee,* 08. September 2005
- Ullnann's Encyclopedia of Industrial Chemistry. VCH Verlagsgesellschaft mbH, 1992, vol. A20, 297
- Ullmann's Encyclopedia of hidustrial Chemistry. VCH Verlagsgesellschaft mbH, 1992, vol. A20, 330